(19) Europäisches Patentamt
European Patent Office
Office européen des brevets

(11) **EP 4 521 328 A1**

(12) **EUROPEAN PATENT APPLICATION**
published in accordance with Art. 153(4) EPC

(43) Date of publication:
**12.03.2025 Bulletin 2025/11**

(21) Application number: **23811034.0**

(22) Date of filing: **23.05.2023**

(51) International Patent Classification (IPC):
***G06Q 30/06*** (2023.01)

(52) Cooperative Patent Classification (CPC):
**G06Q 30/06; H04L 47/24; H04L 47/80**

(86) International application number:
**PCT/CN2023/095705**

(87) International publication number:
**WO 2023/226963 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.05.2022 CN 202210589132**

(71) Applicant: **Huawei Technologies Co., Ltd.
Shenzhen, Guangdong 518129 (CN)**

(72) Inventors:
• **LI, Yuechen
Shenzhen, Guangdong 518129 (CN)**
• **XU, Huiying
Shenzhen, Guangdong 518129 (CN)**
• **CAI, Shengming
Shenzhen, Guangdong 518129 (CN)**
• **XIA, Bin
Shenzhen, Guangdong 518129 (CN)**
• **SHI, Hao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CLOUD RESOURCE RECOMMENDATION METHOD AND RELATED DEVICE**

(57) This application provides a cloud resource recommendation method and a related device, to implement efficient cloud resource recommendation and improve user experience. The cloud resource recommendation device obtains a requirement of a user on a cloud resource, where the requirement of the user on the cloud resource includes a quality of service requirement of the user on a routing path between a cloud node and an access device of the user. The cloud resource recommendation device obtains information about the cloud node, where information about each cloud node includes quality of service information of a routing path between the cloud node and the access device of the user. The cloud resource recommendation device determines a cloud resource recommendation result based on the quality of service requirement and the quality of service information, where the cloud resource recommendation result includes a recommended cloud node, and quality of service information of at least one routing path between the recommended cloud node and the access device of the user meets the quality of service requirement.

<u>100</u>

S101: Obtain a requirement of a user on a cloud resource, where the requirement of the user on the cloud resource includes a QoS requirement

↓

S102: Obtain information about a cloud node, where the information about the cloud node includes QoS information

↓

S103: Determine a cloud resource recommendation result based on the QoS requirement and the QoS information

FIG. 3

EP 4 521 328 A1

## Description

This application claims priority to Chinese Patent Application No. 202210589132.7, filed on May 27, 2022 and entitled "CLOUD RESOURCE RECOMMENDATION METHOD AND RELATED DEVICE", which is incorporated herein by reference in its entirety.

## TECHNICAL FIELD

This application relates to the field of communication technologies, and in particular, to a cloud resource recommendation method and a related device.

## BACKGROUND

Cloud computing service providers provide various types of cloud resources with different prices. Users usually need to manually select cloud resources. For example, users manually select cloud resources through filtering from hot package recommendations of the cloud computing service providers. For another example, users select cloud resources recommended through manual analysis by third-party agencies.

However, the foregoing implementation process is time- and labor-consuming for selection of cloud resources, and efficiency is low.

## SUMMARY

This application provides a cloud resource recommendation method and a related device, to implement efficient cloud resource recommendation and improve user experience.

A first aspect of this application provides a cloud resource recommendation method. The method is performed by a cloud resource recommendation device, or the method is performed by some components (such as a processor, a chip, a chip system, or the like) in a cloud resource recommendation device, or the method is implemented by a logic module or software that can implement all or some functions of a cloud resource recommendation device. In the first aspect and possible implementations of the first aspect, descriptions are provided by using an example in which the cloud resource recommendation method is performed by the cloud resource recommendation device. The cloud resource recommendation device obtains a requirement of a user on a cloud resource, where the requirement of the user on the cloud resource includes a quality of service (quality of service, QoS) requirement of the user on a routing path between a cloud node and an access device of the user. The cloud resource recommendation device obtains information about the cloud node, where information about each cloud node includes QoS information of a routing path between the cloud node and the access device of the user. The cloud resource recommendation device determines a cloud resource recommendation result based on the QoS requirement and the QoS information. The cloud resource recommendation result includes a recommended cloud node. QoS information of at least one routing path between the recommended cloud node and the access device of the user meets the QoS requirement.

Based on the foregoing technical solution, after the cloud resource recommendation device obtains the QoS requirement of the user on the routing path between the cloud node and the access device of the user and the QoS information of the routing path between the cloud node and the access device of the user, the cloud resource recommendation device determines the cloud resource recommendation result based on the QoS requirement and the QoS information. Compared with a manner of manually selecting the cloud resource, the technical solution can reduce labor costs and time costs, and implement efficient cloud resource recommendation. In addition, in a process of determining the cloud resource recommendation result, the cloud resource recommendation result is determined based on the QoS requirement of the user on the routing path between the cloud node and the access device of the user, so that the QoS information of the at least one routing path between the recommended cloud node and the access device of the user included in the cloud resource recommendation result meets the QoS requirement of the user. Therefore, service deployment based on the cloud resource recommended in the technical solution can improve service quality, and further improve user experience.

In a possible implementation of the first aspect, the QoS requirement includes at least one of the following: a bandwidth requirement of the user on the routing path, a delay requirement of the user on the routing path, a jitter requirement of the user on the routing path, or a packet loss rate requirement of the user on the routing path.

Based on the foregoing technical solution, options of diversified QoS requirements may be provided for the user.

In a possible implementation of the first aspect, that the QoS information of the at least one routing path meets the QoS requirement includes: When the QoS requirement includes the bandwidth requirement of the user on the routing path, an available bandwidth of the at least one routing path is greater than or equal to the bandwidth requirement; when the QoS requirement includes the delay requirement of the user on the routing path, a delay of the at least one routing path is less than or equal to the delay requirement; when the QoS requirement includes the jitter requirement of the user on the routing path, a jitter of the at least one routing path is less than or equal to the jitter requirement; or when the QoS requirement includes the packet loss rate requirement of the user on the routing path, a packet loss rate of the at least one routing path is less than or equal to the packet loss rate requirement.

Based on the foregoing technical solution, the cloud resource recommendation result determined by the cloud resource recommendation device can meet the diversified QoS requirements of the user.

In a possible implementation of the first aspect, the requirement on the cloud resource further includes a first requirement of the user on the cloud resource. The first requirement includes at least one of the following: a preference requirement of the user on a provider to which the cloud node belongs, a preference requirement of the user on a geographical location of the cloud resource, a preference requirement of the user on a service scenario, and a redundancy and backup requirement of the user on the cloud resource. The determining a cloud resource recommendation result from a plurality of cloud nodes based on the QoS requirement and the QoS information includes: determining the cloud resource recommendation result from the plurality of cloud nodes based on the QoS requirement, the QoS information, and the first requirement, where the recommended cloud node included in the cloud resource recommendation result meets the QoS requirement and the first requirement.

Based on the foregoing technical solution, the cloud resource recommendation result determined by the cloud resource recommendation device can meet the diversified requirements of the user on the cloud resource.

In a possible implementation of the first aspect, that the recommended cloud node included in the cloud resource recommendation result meets the first requirement includes: When the first requirement includes the preference requirement of the user on the provider to which the cloud node belongs, a provider to which the recommended cloud node belongs is a provider indicated by the preference requirement of the user on the provider to which the cloud node belongs; when the first requirement includes the preference requirement of the user on the geographical location of the cloud resource, the recommended cloud node is located at a geographical location indicated by the preference requirement of the user on the geographical location of the cloud resource; when the first requirement includes the preference requirement of the user on the service scenario, a service scenario of a cloud resource provided by the recommended cloud node includes a service scenario indicated by the preference requirement of the user on the service scenario; or when the first requirement includes the redundancy and backup requirement of the user on the cloud resource, the recommended cloud node includes a primary cloud node and at least one standby cloud node.

In a possible implementation of the first aspect, the recommended cloud node includes at least two cloud nodes, and the cloud resource recommendation device sorts the at least two cloud nodes based on fees of the at least two cloud nodes.

Based on the foregoing technical solution, after obtaining the cloud resource recommendation result, the user may determine a result of the sorting, so that the user further selects a cloud resource with a low fee or meeting a fee budget of the user.

In a possible implementation of the first aspect, before the cloud resource recommendation device sorts the at least two cloud nodes based on the fees of the at least two cloud nodes, the cloud resource recommendation device determines the fees of the at least two cloud nodes based on a quantity requirement of the user on the cloud resource and a unit price of the cloud resource, where the quantity requirement of the user on the cloud resource includes a quantity requirement of the user on a computing resource in the cloud resource and/or a quantity requirement of the user on a storage resource in the cloud resource.

Because unit prices of cloud resources provided by different cloud nodes in the at least two cloud nodes may be different, to be specific, different cloud nodes may correspond to different fees of a same quantity requirement on the cloud resource, the cloud resource recommendation device may determine fees of different cloud nodes in the at least two cloud nodes based on the quantity requirement of the user on the cloud resource and the unit price of the cloud resource, to sort the at least two cloud nodes.

In a possible implementation of the first aspect, the cloud resource recommendation result further includes a connection manner between the recommended cloud node and the access device of the user.

Optionally, the connection manner may include a site-to-cloud private line connection, a broadband connection, or another connection.

Because different connection manners between the cloud node and the access device of the user may cause different data transmission performance related to the cloud resource, the cloud resource recommendation result further includes the connection manner between the recommended cloud node and the access device of the user, so that the user subsequently determines, based on the connection manner in the cloud resource recommendation result, data transmission performance of the cloud resource provided by the recommended cloud node.

Optionally, fees corresponding to different connection manners may be different. To be specific, a fee corresponding to a connection manner with high data transmission performance is higher than a fee corresponding to a connection manner with low data transmission performance. In addition to the connection manner between the recommended cloud node and the access device of the user, the cloud resource recommendation result may further include fee information corresponding to the connection manner, so that the user further selects a cloud resource with a low fee or meeting a fee budget of the user.

In a possible implementation of the first aspect, the cloud node includes a cloud data center (data center, DC) node and/or an edge cloud node.

Optionally, the cloud DC node is a set of one or more devices that provide a cloud resource. Similarly, the edge cloud node is a set of one or more devices that provide a cloud resource. A device that provides the cloud resource may include a server, a virtual machine, and the like.

A second aspect of this application provides a cloud resource recommendation apparatus. The apparatus can implement the method in any one of the first aspect or the possible implementations of the first aspect. The apparatus includes a corresponding unit or module configured to perform the method. The unit or module included in the apparatus can be implemented by software and/or hardware. For example, the apparatus may be a cloud resource recommendation device, or the apparatus may be a component (for example, a processor, a chip, a chip system, or the like) in the cloud resource recommendation device, or the apparatus may be a logic module or software that can implement all or some functions of the cloud resource recommendation device. The apparatus includes an obtaining unit and a determining unit. The obtaining unit is configured to obtain a requirement of a user on a cloud resource, where the requirement of the user on the cloud resource includes a quality of service QoS requirement of the user on a routing path between a cloud node providing the cloud resource and an access device of the user. The obtaining unit is further configured to obtain information about the cloud node, where information about each cloud node includes QoS information of a routing path between the cloud node and the access device of the user. The determining unit is configured to determine a cloud resource recommendation result based on the QoS requirement and the QoS information. The cloud resource recommendation result includes a recommended cloud node, and QoS information of at least one routing path between the recommended cloud node and the access device of the user meets the QoS requirement.

In a possible implementation of the second aspect, the QoS requirement includes at least one of the following: a bandwidth requirement of the user on the routing path, a delay requirement of the user on the routing path, a jitter requirement of the user on the routing path, or a packet loss rate requirement of the user on the routing path.

In a possible implementation of the second aspect, that the QoS information of the at least one routing path meets the QoS requirement includes: When the QoS requirement includes the bandwidth requirement of the user on the routing path, an available bandwidth of the at least one routing path is greater than or equal to the bandwidth requirement; when the QoS requirement includes the delay requirement of the user on the routing path, a delay of the at least one routing path is less than or equal to the delay requirement; when the QoS requirement includes the jitter requirement of the user on the routing path, a jitter of the at least one routing path is less than or equal to the jitter requirement; or when the QoS requirement includes the packet loss rate requirement of the user on the routing path, a packet loss rate of the at least one routing path is less than or equal to the packet loss rate requirement.

In a possible implementation of the second aspect, the requirement on the cloud resource further includes a first requirement of the user on the cloud resource, and the first requirement includes at least one of the following: a preference requirement of the user on a provider to which the cloud node belongs, a preference requirement of the user on a geographical location of the cloud resource, a preference requirement of the user on a service scenario, and a redundancy and backup requirement of the user on the cloud resource. That the determining unit is configured to determine a cloud resource recommendation result from a plurality of cloud nodes based on the QoS requirement and the QoS information includes: The determining unit is configured to determine the cloud resource recommendation result from the plurality of cloud nodes based on the QoS requirement, the QoS information, and the first requirement, where the recommended cloud node included in the cloud resource recommendation result meets the QoS requirement and the first requirement.

In a possible implementation of the second aspect, that the recommended cloud node included in the cloud resource recommendation result meets the first requirement includes: When the first requirement includes the preference requirement of the user on the provider to which the cloud node belongs, a provider to which the recommended cloud node belongs is a provider indicated by the preference requirement of the user on the provider to which the cloud node belongs; when the first requirement includes the preference requirement of the user on the geographical location of the cloud resource, the recommended cloud node is located at a geographical location indicated by the preference requirement of the user on the geographical location of the cloud resource; when the first requirement includes the preference requirement of the user on the service scenario, a service scenario of a cloud resource provided by the recommended cloud node includes a service scenario indicated by the preference requirement of the user on the service scenario; or when the first requirement includes the redundancy and backup requirement of the user on the cloud resource, the recommended cloud node includes a primary cloud node and at least one standby cloud node.

In a possible implementation of the second aspect, the recommended cloud node includes at least two cloud nodes, and the apparatus further includes: a sorting unit, configured to sort the at least two cloud nodes based on fees of the at least two cloud nodes.

In a possible implementation of the second aspect, the determining unit is further configured to determine the fees of the at least two cloud nodes based on a quantity requirement of the user on the cloud resource and a unit price of the cloud resource, where the quantity requirement of the user on the cloud resource includes a quantity requirement of the user on a computing resource in the cloud resource and/or a quantity requirement of the user on a storage resource in the cloud resource.

In a possible implementation of the second aspect, the cloud resource recommendation result further includes a connection manner between the recommended cloud node and the access device of the user.

In a possible implementation of the second aspect, the cloud node includes a cloud data center DC node and/or an edge cloud node.

A third aspect of this application provides a cloud resource recommendation device. The device includes at least one processor. The at least one processor is coupled to a memory. The memory is configured to store a program or instructions. The at least one processor is configured to execute the program or the instructions, to enable the device to implement the method according to any one of the first aspect or the possible implementations of the first aspect.

A fourth aspect of this application provides a cloud resource recommendation apparatus, including at least one logic circuit and an input/output interface, where the logic circuit is configured to perform the method according to any one of the first aspect or the possible implementations of the first aspect.

A fifth aspect of this application provides a computer-readable storage medium, configured to store computer instructions; and when the computer instructions are executed by a processor, the processor performs the method according to any one of the first aspect or the possible implementations of the first aspect.

A sixth aspect of this application provides a computer program product (or referred to as a computer program), where the computer program product includes instructions; and when the instructions in the computer program product are executed by a processor, the processor performs the method according to any one of the first aspect or the possible implementations of the first aspect.

A seventh aspect of this application provides a chip system. The chip system includes at least one processor, configured to support a cloud resource recommendation apparatus in implementing a function involved in any one of the first aspect or the possible implementations of the first aspect.

In a possible design, the chip system may further include a memory, and the memory is configured to store program instructions and data that are necessary for the cloud resource recommendation apparatus. The chip system may include a chip, or may include a chip and another discrete component. Optionally, the chip system further includes an interface circuit, and the interface circuit provides program instructions and/or data for the at least one processor.

An eighth aspect of this application provides a cloud resource recommendation system, where the cloud resource recommendation system includes the cloud resource recommendation apparatus according to the third aspect or the cloud resource recommendation apparatus according to the fourth aspect.

For technical effects brought by any one of the designs of the second aspect to the eighth aspect, refer to the technical effects brought by the different implementations of the first aspect. Details are not described herein again.

## BRIEF DESCRIPTION OF DRAWINGS

FIG. 1 is a schematic diagram of an application scenario of a cloud resource recommendation method according to an embodiment of this application;
FIG. 2 is another schematic diagram of an application scenario of a cloud resource recommendation method according to an embodiment of this application;
FIG. 3 is a schematic diagram of a cloud resource recommendation method according to an embodiment of this application;
FIG. 4 is another schematic diagram of an application scenario of a cloud resource recommendation method according to an embodiment of this application;
FIG. 5 is another schematic diagram of an application scenario of a cloud resource recommendation method according to an embodiment of this application;
FIG. 6 is another schematic diagram of an application scenario of a cloud resource recommendation method according to an embodiment of this application;
FIG. 7 is a schematic diagram of a cloud resource recommendation apparatus according to an embodiment of this application; and
FIG. 8 is a schematic diagram of a cloud resource recommendation device according to an embodiment of this application.

## DESCRIPTION OF EMBODIMENTS

To make the objectives, technical solutions, and advantages of this application clearer, the following further describes the implementations of this application in detail with reference to the accompanying drawings.

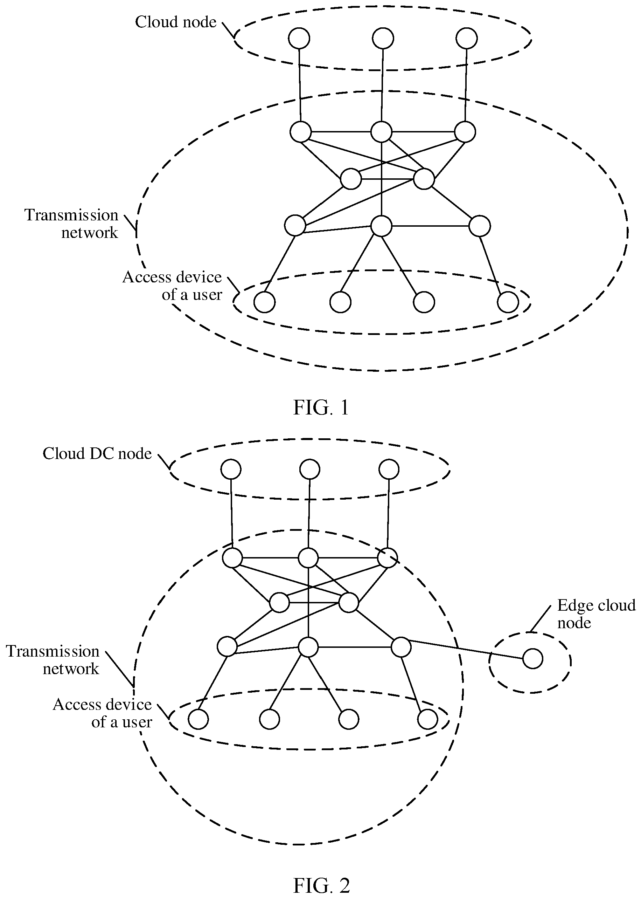

FIG. 1 is a schematic diagram of an application scenario of a cloud resource recommendation method according to an embodiment of this application. FIG. 1 includes a cloud node and a transmission network. The transmission network includes an access device of a user shown in FIG. 1 and a routing node configured to perform data transmission.

In FIG. 1, a cloud resource is provided by the cloud node. In other words, the cloud node may provide the cloud resource, or the cloud resource is deployed on the cloud node. The cloud resource may include a computing resource, a storage resource, and the like. The cloud node includes a cloud data center (data center, DC) node and/or an edge cloud node.

Optionally, the cloud DC node is a set of one or more devices that provide a cloud resource. Similarly, the edge cloud node is a set of one or more devices that provide a cloud resource. A device that provides the cloud resource may include a server, a virtual machine, and the like.

For example, as shown in FIG. 2, a cloud node whose deployment location is close to a user may be referred to as an edge cloud node, and a cloud node whose deployment location is away from the user may be referred to as a cloud DC node. The edge cloud node may provide an internet technology (Internet Technology, IT) service environment and a computing capability at an edge of a transmission network (namely, a transmission network between the cloud node and the access device of the user), and the edge cloud node is close to the user, to reduce a data transmission distance, reduce a network transmission delay, and improve user experience.

Optionally, in actual application, operation costs of the cloud node (namely, the edge cloud node) deployed close to the user are high, and operation costs of the cloud node (namely, another cloud node other than the edge cloud node, for example, the cloud DC node) deployed away from the user are low. Therefore, compared with the edge cloud node, the another cloud node can generally provide more abundant cloud resources, and is more suitable for processing a project and a task of massive data storage and computing.

In FIG. 1, the transmission network is configured to transmit data related to the cloud resource from the cloud node to the access device of the user, or transmit data of the user to the cloud resource, so that the user may use the cloud resource.

Optionally, the transmission network may include a metropolitan area network, a backbone network, a cloud private network, or the like. The cloud private network is specially configured to perform transmission of data exchanged between the cloud resource and the user. For example, the cloud private network may be an overlay network established based on a backbone network, and the overlay network is dedicated for transmission of the data exchanged between the cloud resource and the user.

In FIG. 1, the access device of the user may be a device such as a router, a switch, a residential gateway (Residential Gateway, RG), a set top box, a fixed-mobile convergence product, a home network adapter, and an internet access gateway.

Optionally, the access device of the user may also be referred to as a customer-premises equipment (customer-premises equipment, CPE), the CPE is a device located at a location of the user, and the CPE can support the user in connecting to a network of an operator at a demarcation point. The demarcation point is a point established in a building or a complex to separate the CPE from a device located in a distribution infrastructure or a central office of a communication service provider.

In a possible implementation, a cloud resource recommendation device recommends a cloud node and a cloud resource to the user based on a fee of each cloud resource in each cloud node. For example, the cloud resource recommendation device obtains cost-benefit values of a plurality of cloud nodes in FIG. 1, where the cost-benefit value is a ratio of charging data of the cloud node to a performance index. In addition, the cloud resource recommendation device obtains a quantity requirement that is on a cloud resource needed by a user task and that is entered by the user through the access device in FIG. 1. Then, the cloud resource recommendation device determines fees of cloud resources of the plurality of cloud nodes based on the cost-benefit values of the plurality of cloud nodes and the quantity requirement, and recommends a cloud node that provides a cloud resource with a low fee to the user.

Optionally, when the cloud resource needed by the user task includes a storage resource, the quantity requirement may indicate a quantity requirement of the user on the storage resource. For example, the quantity requirement may be represented as x gigabytes (gigabyte, GB), x terabytes (terabyte, TB), and the like, where a value of x is a positive number.

Optionally, when the cloud resource needed by the user task includes a computing resource, the quantity requirement may indicate a quantity requirement of the user on the computing resource. For example, the quantity requirement may include a quantity requirement on a computing capability of a central processing unit (central processing unit, CPU), which may be represented as dominant frequency information, a quantity of cores, and the like. For another example, the quantity requirement may include a quantity requirement on a computing capability of a graphics processing unit (graphics processing unit, GPU), which may be represented as a quantity of floating-point operations per second (floating-point operations per second, FLOPS).

In a possible implementation, the cloud resource recommendation device recommends a cloud resource to the user based on a scenario requirement and a configuration requirement of the user, and scenario information and configuration information that correspond to a cloud resource in each cloud node. For example, the cloud resource recommendation device obtains scenario information and configuration information that correspond to the cloud resources provided by the plurality of cloud nodes in FIG. 1. Scenario information corresponding to a cloud resource provided by each cloud node indicates a service scenario to which the cloud resource is applicable, for example, a computing service scenario, a storage service scenario, an IoT scenario, or the like. Configuration information corresponding to the cloud resource provided by each cloud node indicates hardware configuration information of the cloud resource, for example, processor information, memory information, or the like. In addition, the cloud resource recommendation device obtains the scenario requirement and the configuration requirement of the user. Then, the cloud resource recommendation device recommends, to the user in the plurality of cloud nodes, a cloud node that meets the scenario requirement and the configuration requirement of the user.

In the foregoing implementation, the cloud resource recommendation device recommends the cloud resource to the user based on a low charging requirement of the user on the cloud resource, or the scenario requirement and the configuration requirement of the user on the cloud resource. Compared with a manner of manually selecting the cloud resource, this implementation can improve efficiency of recommending the cloud resource.

As shown in FIG. 1, the cloud resource is provided by the cloud node, and transmission of data related to the cloud resource needs to be performed by a routing node between the access device of the user and the cloud node, where the routing node is configured to perform data transmission. After the user selects the cloud resource based on a recommendation result in the foregoing implementation, because QoS of the transmission network between the cloud node providing the cloud resource and the access device of the user is excessively low, quality of a service deployed by the user in the foregoing selected cloud resource is poor, leading to poor user experience.

Therefore, embodiments of this application provide a cloud resource recommendation method and a related device, to implement efficient cloud resource recommendation and improve user experience. Specifically, in the cloud resource recommendation method, the cloud resource recommendation device implements cloud resource recommendation based on a QoS requirement of the user and QoS information of the cloud node. Compared with a manner of manually selecting the cloud resource, the implementation can reduce labor costs and time costs, and implement efficient cloud resource recommendation. In addition, in a process of determining the cloud resource recommendation result by the cloud resource recommendation device, the cloud resource recommendation result is determined based on a QoS requirement of the user on a routing path between the cloud node and the access device of the user, so that QoS information of at least one routing path between a cloud node to which a recommended cloud resource belongs and the access device of the user meets the QoS requirement of the user. This can improve quality of a service deployed by the user in the recommended cloud resource, and improve user experience. Descriptions are provided in detail below with reference to the accompanying drawings.

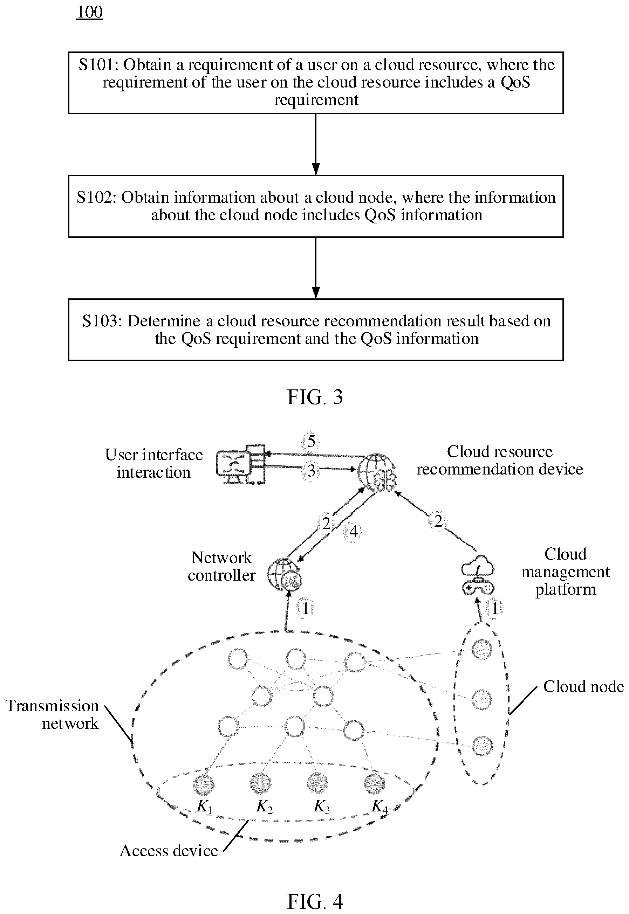

FIG. 3 is a schematic diagram of a cloud resource recommendation method 100 according to an embodiment of this application. The method includes the following steps.

It should be noted that the method shown in FIG. 3 is performed by a cloud resource recommendation device, or the method shown in FIG. 3 is performed by some components (such as a processor, a chip, a chip system, or the like) in a cloud resource recommendation device, or the method shown in FIG. 3 is implemented by a logic module or software that can implement all or some functions in a cloud resource recommendation device. In the following implementation, descriptions are provided by using an example in which the cloud resource recommendation method shown in FIG. 3 is performed by the cloud resource recommendation device. The cloud resource recommendation device may be a device such as a server, a cloud device (for example, a public cloud device, a private cloud device, a hybrid cloud device, or the like), or a management device or a control device in a network.

S101: Obtain a requirement of a user on a cloud resource.

In this embodiment, the cloud resource recommendation device obtains the requirement of the user on the cloud resource in step S101, where the requirement of the user on the cloud resource includes a QoS requirement of the user on a routing path between a cloud node and an access device of the user.

For example, FIG. 1 is used as an example. The routing path between the cloud node and the access device of the user is used for transmission of data exchanged between a cloud resource deployed in the cloud node and the access device of the user.

The cloud resource recommendation device may obtain the requirement of the user on the cloud resource in a plurality of manners. For example, the cloud resource recommendation device may obtain an input instruction of the user through an input/output module (for example, a display screen, a mouse, a keyboard, or the like), and the cloud resource recommendation device determines the requirement of the user on the cloud resource according to the input instruction of the user. For another example, the user may establish a network connection with the cloud resource recommendation device through a terminal device, and the user sends the requirement of the user on the cloud resource to the cloud resource recommendation device through the network connection, so that the cloud resource recommendation device obtains the requirement of the user on the cloud resource.

Optionally, because different users are located at different geographical locations, the different users may correspond to different access devices. The cloud resource recommendation device may determine the access device of the user in a plurality of manners. For example, the cloud resource recommendation device may determine the access device of the user by using network address information (for example, an internet protocol (Internet Protocol, IP) address, a media access control (Media Access Control, MAC) address, or the like) used by the user. For another example, the requirement that is of the user on the cloud resource and that is obtained by the cloud resource recommendation device in step S101 includes related information of the access device of the user.

It should be noted that a quantity of access devices of a same user is not limited in this application, in other words, a quantity of access devices of a user may be one or more.

Optionally, when the quantity of access devices of the user is more than one, the plurality of access devices of the user may be deployed at different geographical locations.

It should be understood that in step S101, the QoS requirement included in the requirement of the user on the cloud resource may be a plurality of different QoS requirements of the user on routing paths between the cloud node and the plurality of access devices, or may be a same QoS requirement of the user on routing paths between the cloud node and the plurality of access devices. This is not limited in this application. For another example, when a quantity of access devices of the user is more than one, in step S101, the QoS requirement included in the requirement of the user on the cloud resource may be a QoS requirement of the user on a routing path between the cloud node and one of the plurality of access devices, so that the cloud resource recommendation device may obtain the QoS requirements of the user on the routing paths between the cloud node and the plurality of access devices by performing step S101 for a plurality of times. For ease of description, descriptions are provided below by using an example in which a quantity of access devices of the user is one.

S102: Obtain information about the cloud node.

In this embodiment, the cloud resource recommendation device obtains the information about the cloud node in step S102, where information about each cloud node includes QoS information of a routing path between the cloud node and the access device of the user.

In a possible implementation, the cloud resource recommendation device may obtain the information about the cloud node in a plurality of manners in step S102.

FIG. 1 is used as an example. The cloud resource recommendation device establishes a connection with a node in a transmission network, and the cloud resource recommendation device obtains the QoS information of the routing path through the connection. For another example, a network controller exists in the transmission network, the network controller may obtain the QoS information of the routing path, and the cloud resource recommendation device may obtain the information about the cloud node in a manner of exchanging information with the network controller.

Descriptions are provided below by using an implementation process in which the cloud resource recommendation device obtains the QoS information of the routing path through the connection as an example. The QoS information of the routing path includes a plurality of types of information, for example, an available bandwidth of the routing path, a delay of the routing path, a packet loss rate of the routing path, a jitter of the routing path, and the like.

For example, for the available bandwidth of the routing path, the cloud resource recommendation device may collect bandwidth information of the routing path in a manner such as the simple network management protocol (Simple Network Management Protocol, SNMP) or a telemetry (Telemetry), to determine the available bandwidth of the routing path. For the packet loss rate and the jitter of the routing path, the cloud resource recommendation device may determine the delay, the packet loss rate, and the like of the routing path through an in-situ flow information telemetry (in-situ Flow Information Telemetry, iFit) technology, a two-way active measurement protocol (Two-way Active Measurement Protocol, TWAMP) technology, or the like.

Descriptions are provided below through some implementation examples.

In an implementation example, when the QoS information of the routing path includes the available bandwidth of the routing path, a value of the available bandwidth of the routing path may be determined, after the available bandwidth of the routing path is collected at a plurality of moments within preset duration to obtain a plurality of bandwidth values, by the cloud resource recommendation device based on statistic values of the plurality of bandwidth values. For example, the statistic value may be a bandwidth value corresponding to a preset quantile. In other words, the cloud resource recommendation device sorts the plurality of bandwidth values in descending order, and determines, based on a result of the sorting, a bandwidth value corresponding to the preset quantile (for example, 95%, 90%, or the like) as the value of the available bandwidth of the routing path. For another example, the statistic value may be a smallest value of the plurality of bandwidth values.

In another implementation example, when the QoS information of the routing path includes the delay (or the packet loss rate, the jitter, or the like) of the routing path, a value of the delay (or the packet loss rate, the jitter, or the like) of the routing path may be determined, after the delay (or the packet loss rate, the jitter, or the like) of the routing path is collected at a plurality of moments within preset duration to obtain a plurality of delay (or packet loss rate, jitter, or the like) values, based on statistic values of the plurality of delay (or packet loss rate, jitter, or the like) values. For example, the statistic value may be a value of a delay (or a packet loss rate, a jitter, or the like) corresponding to the preset quantile. In other words, the cloud resource recommendation device sorts the plurality of delay (or packet loss rate, jitter, or the like) values in ascending order, and determines, based on a result of the sorting, a delay (or packet loss rate, jitter, or the like) value corresponding to the preset quantile (for example, 95%, 90%, or the like) as the value of the delay (or the packet loss rate, the jitter, or the like) of the routing path. For another example, the statistic value may be a largest value of the plurality of delay (or packet loss rate, jitter, or the like) values. For another example, the statistic value may be an average value of the plurality of delay (or packet loss rate, jitter, or the like) values.

Optionally, the requirement that is of the user on the cloud resource and that is obtained by the cloud resource recommendation device in step S101 may further include looseness of a performance requirement of the user on the QoS requirement, which indicates that the performance requirement of the user on the QoS requirement is strict or loose. When the user has a strict performance requirement on the QoS requirement, the statistic value related to the bandwidth may be the smallest value of the plurality of bandwidth values, and the statistic value related to the delay (or packet loss rate) may be the largest value of the plurality of delay (or packet loss rate) values, to meet the strict performance requirement of the user. When the user has a loose performance requirement on the QoS requirement, the statistic value related to the bandwidth may be the bandwidth value corresponding to the preset quantile, and the statistic value related to the delay (or the packet loss rate) may be the delay (or packet loss rate) value corresponding to the preset quantile, to improve a success rate of subsequently recommending the cloud resource to the user while meeting the loose performance requirement of the user. In other words, when the user has the strict performance requirement on the QoS requirement, the information about the cloud node obtained by the cloud resource recommendation device in step S102 is determined based on worst QoS performance information corresponding to the cloud node, so that the requirement of the user can be met with a high probability based on the worst QoS performance information. Correspondingly, when the user has the loose performance requirement on the QoS requirement, the information about the cloud node obtained by the cloud resource recommendation device in step S102 is determined based on non-worst QoS performance information (for example, an implementation of the preset quantile) corresponding to the cloud node, so that a large quantity of cloud nodes may be provided for the user to select based on the non-worst QoS performance information on the premise that the user requirement is met.

It should be understood that, in this embodiment, an execution sequence of step S101 and step S102 is not limited. The cloud resource recommendation device may first perform step S101 and then perform step S102, or the cloud resource recommendation device may first perform step S102 and then perform step S101. This is not limited herein.

S103: Determine a cloud resource recommendation result based on the QoS requirement and the QoS information.

In this embodiment, after the cloud resource recommendation device obtains the requirement of the user on the cloud resource in step S101 and obtains the information about the cloud node in step S102, the cloud resource recommendation device determines the cloud resource recommendation result based on the QoS requirement and the QoS information in step S103. The cloud resource recommendation result includes a recommended cloud node, and QoS information of at least one routing path between the recommended cloud node and the access device of the user meets the QoS requirement.

An example in which the scenario shown in FIG. 1 includes three cloud nodes is used. In step 103, the cloud resource recommendation result may include n cloud nodes in the three cloud nodes, and QoS information corresponding to the n cloud nodes meets the QoS requirement of the user, where a value of n is 1, 2, or 3.

Optionally, when the recommended cloud node includes at least two cloud nodes (to be specific, a value of n is 2 or 3), the at least two cloud nodes may serve customers that are of the user and that perform access through a same access device, or the at least two cloud nodes may respectively serve customers that are of the user and that perform access through different access devices. Descriptions are provided below by using an example in which the value of n is 2.

For example, when the recommended cloud node includes two cloud nodes, the two cloud nodes may provide a service for one access device of one user. In other words, the user may use, through the one access device, cloud resources provided by the two cloud nodes.

For another example, when the recommended cloud node includes two cloud nodes, the two cloud nodes may provide services for two access devices of one user. In other words, the user may separately use, through the two access devices, cloud resources provided by the two cloud nodes. The two access devices of the user may be located at different geographical locations (for example, different cities, different districts of a same city, or the like), so that all access devices located at different geographical locations may access a service on the cloud resource deployed on the cloud node.

Optionally, a user of the access devices located at different geographical locations may include an employee of an enterprise to which the user belongs, or may include an external customer served by an enterprise to which the user belongs, and the like. This is not limited herein.

For another example, when the recommended cloud node includes two cloud nodes, one of the two cloud nodes may provide a service for one access device of one user. The two cloud nodes may provide a redundancy service. In other words, the two cloud nodes include a primary cloud node and a standby cloud node.

In a possible implementation, the QoS requirement included in the requirement that is of the user on the cloud resource and that is obtained by the cloud resource recommendation device in step S101 includes at least one of the following: a bandwidth requirement of the user on the routing path, a delay requirement of the user on the routing path, a jitter requirement of the user on the routing path, or a packet loss rate requirement of the user on the routing path. Specifically, the requirement of the user on the cloud resource includes the QoS requirement of the user on the routing path between the cloud node and the access device of the user. The QoS requirement may specifically include at least one of the foregoing, and may provide options of diversified QoS requirements for the user.

In addition, that the QoS information of the at least one routing path determined by the cloud resource recommendation device in step S103 meets the QoS requirement includes: When the QoS requirement includes the bandwidth requirement of the user on the routing path, an available bandwidth of the at least one routing path is greater than or equal to the bandwidth requirement; when the QoS requirement includes the delay requirement of the user on the routing path, a delay of the at least one routing path is less than or equal to the delay requirement; when the QoS requirement includes the jitter requirement of the user on the routing path, a jitter of the at least one routing path is less than or equal to the jitter requirement; or when the QoS requirement includes the packet loss rate requirement of the user on the routing path, a packet loss rate of the at least one routing path is less than or equal to the packet loss rate requirement.

Specifically, when the QoS requirement of the user on the routing path between the cloud node and the access device of the user includes at least one of the foregoing, the QoS information of the at least one routing path between the recommended cloud node and the access device of the user included in the cloud resource recommendation result determined by the cloud resource recommendation device in step S103 meets the at least one QoS requirement, so that the cloud resource recommendation result determined by the cloud resource recommendation device can meet the diversified QoS requirements of the user.

It may be learned from the foregoing implementation process that, after the cloud resource recommendation device separately obtains the QoS requirement of the user on the routing path between the cloud node and the access device of the user in step S101, and obtains the QoS information of the routing path between the cloud node and the access device of the user in step S102, the cloud resource recommendation device determines the cloud resource recommendation result based on the QoS requirement and the QoS information in step S103. Therefore, in the cloud resource recommendation method 100, the cloud resource recommendation device implements cloud resource recommendation based on the obtained QoS requirement of the user and the obtained QoS information of the cloud node. Compared with a manner of manually selecting the cloud resource, the method can reduce labor costs and time costs, and implement efficient cloud resource recommendation. In addition, in a process of determining the cloud resource recommendation result by the cloud resource recommendation device, the cloud resource recommendation result is determined based on the QoS requirement of the user on the routing path between the cloud node and the access device of the user, so that the QoS information of the at least one routing path between the recommended cloud node and the access device of the user included in the cloud resource recommendation result meets the QoS requirement of the user. This can improve quality of a service deployed in a recommended cloud resource and improve user experience.

Optionally, after step S103, the cloud resource recommendation device may send the cloud resource recommendation result to the terminal device of the user, so that the user obtains the cloud resource recommendation result. Alternatively, the cloud resource recommendation device may present the cloud resource recommendation result to the user in a plurality of manners (for example, display on a display screen, voice broadcast, or the like), so that the user obtains the cloud resource recommendation result. After the user obtains the cloud resource recommendation result, the user may use the recommended cloud node as a node that is determined to provide a cloud resource, and the user may obtain the cloud resource in the cloud node (through the cloud resource recommendation device or in another manner) to deploy a service of the user.

In a possible implementation, in step S101, the requirement of the user on the cloud resource further includes a first requirement of the user on the cloud resource. The first requirement includes at least one of the following: a preference requirement of the user on a provider to which the cloud node belongs, a preference requirement of the user on a geographical location of the cloud resource, a preference requirement of the user on a service scenario, and a redundancy and backup requirement of the user on the cloud resource. The determining a cloud resource recommendation result from a plurality of cloud nodes based on the QoS requirement and the QoS information includes: determining the cloud resource recommendation result from the plurality of cloud nodes based on the QoS requirement, the QoS information, and the first requirement, where the recommended cloud node included in the cloud resource recommendation result further meets the first requirement. Specifically, in addition to the QoS requirement of the user on the routing path between the cloud node and the access device of the user, the requirement on the cloud resource may further include the first requirement of the user. The first requirement includes at least one of the foregoing, and may provide the options of the diversified requirements on the cloud resource for the user.

Correspondingly, that the recommended cloud node included in the cloud resource recommendation result determined by the cloud resource recommendation device in step S103 meets the first requirement includes: When the first requirement includes the preference requirement of the user on the provider to which the cloud node belongs, a provider to which the recommended cloud node belongs is a provider indicated by the preference requirement of the user on the provider to which the cloud node belongs; or when the first requirement includes the preference requirement of the user on the geographical location of the cloud resource, the recommended cloud node is located at a geographical location indicated by the preference requirement of the user on the geographical location of the cloud resource; or when the first requirement includes the preference requirement of the user on the service scenario, a service scenario to which a cloud resource provided by the recommended cloud node is applicable includes a service scenario (for example, a computing service scenario, a storage service scenario, an IoT scenario, or the like) indicated by the preference requirement of the user on the service scenario; or when the first requirement includes the redundancy and backup requirement of the user on the cloud resource, the recommended cloud node includes a primary cloud node and at least one standby cloud node. Specifically, when the requirement on the cloud resource further includes the first requirement of the user on the cloud resource, in addition to meeting the QoS requirement of the user, the recommended cloud node included in the cloud resource recommendation result further meets the first requirement, to meet another requirement other than the QoS requirement of the user on the cloud resource.

It should be understood that, when the first requirement includes a redundancy and backup requirement of the user on the cloud resource, the recommended cloud node includes the primary cloud node and the at least one standby cloud node, and both the primary cloud node and the at least one standby cloud node meet the QoS requirement of the user. In addition, in the cloud resource recommendation result, different identifiers may be further added to the primary cloud node and the standby cloud node, so that the user may determine the primary cloud node and the standby cloud node in the recommended cloud node based on the identifiers.

Optionally, both the primary cloud node and the at least one standby cloud node meet the QoS requirement of the user, and QoS performance of the primary cloud node is better than QoS performance of the at least one standby cloud node. In other words, when the cloud resource recommendation device determines that there are a plurality of cloud nodes that meet the QoS requirement of the user, the cloud resource recommendation device determines a node with optimal QoS performance (for example, a largest available bandwidth, a smallest delay, a smallest jitter, or the like) as the primary cloud node.

Optionally, in addition to meeting the QoS requirement of the user, the at least one standby cloud node may further meet another requirement included in the first requirement, for example, at least one of the preference requirement of the user on the provider to which the cloud node belongs, the preference requirement of the user on the geographical location of the cloud resource, and the preference requirement of the user on the service scenario. Alternatively, considering that the at least one standby cloud node is a cloud node that is used only when the primary cloud node is unavailable, the at least one standby cloud node does not need to meet another requirement indicated by the first requirement in addition to meeting the QoS requirement of the user, and a condition that is required by the at least one standby cloud node to be met is reduced, to avoid a case that there is no available standby cloud node due to excessive limitation.

In a possible implementation, the recommended cloud node includes at least two cloud nodes, and after step S103, the method further includes: The cloud resource recommendation device sorts the at least two cloud nodes based on fees of the at least two cloud nodes, so that the user determines the fees of the at least two cloud nodes based on a result of the sorting.

It should be understood that, that the cloud resource recommendation device sorts the at least two cloud nodes based on fees of the at least two cloud nodes may be that the cloud resource recommendation device sorts the at least two cloud nodes in ascending order of fees or in descending order of fees based on the fees of the at least two cloud nodes, or in another manner. This is not limited herein.

In addition, before the cloud resource recommendation device sorts the at least two cloud nodes based on fees of the at least two cloud nodes, the method further includes: The cloud resource recommendation device determines the fees of the at least two cloud nodes based on a quantity requirement of the user on the cloud resource and a unit price of the cloud resource, where the quantity requirement of the user on the cloud resource includes a quantity requirement of the user on a computing resource in the cloud resource and/or a quantity requirement of the user on a storage resource in the cloud resource. Specifically, because unit prices of cloud resources provided by different cloud nodes in the at least two cloud nodes may be different. To be specific, different cloud nodes may correspond to different fees of a same quantity requirement on the cloud resource, and the cloud resource recommendation device may determine fees of different cloud nodes in the at least two cloud nodes based on the quantity requirement of the user on the cloud resource and the unit price of the cloud resource, and sort the at least two cloud nodes to obtain a sorting result. Then, the cloud resource recommendation device may place the sorting result in the cloud resource recommendation result. In this way, after obtaining the cloud resource recommendation result, the user may determine the sorting result, so that the user further selects a cloud resource with a low fee or meeting a fee budget of the user.

Optionally, the unit price of the cloud resource is dynamically adjusted. For example, a unit price of a cloud resource provided by a cloud node is positively correlated with load of the cloud node. To be specific, higher load of the cloud node indicates a higher unit price of the cloud resource provided by the cloud node, and on the contrary, lower load of the cloud node indicates a lower unit price of the cloud resource provided by the cloud node. In other words, a specific unit price discount provided for a low-load cloud node helps increase a probability that the user selects a cloud resource provided by the low-load cloud node, to improve utilization of the overall cloud resource. This helps reduce a resource waste caused by idleness of the cloud resource. Correspondingly, the cloud resource recommendation device may dynamically obtain the unit price of the cloud resource in each cloud node, so that a recommendation result of the cloud resource is more accurate.

It should be understood that load of the cloud node may alternatively be reflected through other information of the cloud node. For example, the other information of the cloud node includes resource utilization of the cloud node. To be specific, higher load of the cloud node indicates higher resource utilization of the cloud node, and lower load of the cloud node indicates lower resource utilization of the cloud node. For another example, the other information of the cloud node includes a resource idle rate of the cloud node. To be specific, higher load of the cloud node indicates a lower resource idle rate of the cloud node, and lower load of the cloud node indicates a higher resource idle rate of the cloud node. Correspondingly, the cloud resource recommendation device may determine the unit price of the cloud resource based on the load of the cloud node and a charge rate of the cloud resource associated with the load of the cloud node.

It should be noted that, the cloud resource recommendation device may further determine the fees of the at least two cloud nodes in another manner. For example, the cloud resource recommendation device separately sends, to providers of the at least two cloud nodes, information indicating a quantity requirement of the user on the cloud resource, so that the providers of the at least two cloud nodes determine fees based on the quantity requirement of the user on the cloud resource, and send, to the cloud resource recommendation device, information indicating the fees, so that the cloud resource recommendation device determines the fees of the at least two cloud nodes.

In a possible implementation, the cloud resource recommendation result determined by the cloud resource recommendation device in step S103 further includes a connection manner between the recommended cloud node and the access device of the user. Specifically, because different connection manners between the cloud node and the access device of the user may cause different data transmission performance related to the cloud resource, the cloud resource recommendation result further includes the connection manner between the recommended cloud node and the access device of the user, so that the user subsequently determines, based on the connection manner in the cloud resource recommendation result, data transmission performance of the cloud resource provided by the recommended cloud node.

Optionally, the connection manner may include a site-to-cloud private line connection, a broadband connection, or another connection. This is not limited herein.

Optionally, when a connection manner between a cloud node and an access device of a user is the broadband connection (for example, a default connection provided by a network operator), the connection manner generally corresponds to one routing path (or referred to as a default routing path). The default routing path may be determined based on a manner of a smallest path cost (cost) (or a shortest forwarding path, or another manner).

Optionally, when a connection manner between a cloud node and an access device of a user is the site-to-cloud private line connection, the connection manner may correspond to a customized routing path, and is specially used for transmission of data related to a cloud resource of the user.

In addition, the transmission performance mainly includes performance reflected by QoS information such as a delay, a packet loss, a jitter, or the like. In a case of the broadband connection, data exchanged between the user and the cloud resource, data of another service of the user, and service data of another user contend for use of a network resource. The site-to-cloud private line is used for transmission of only the data exchanged between the user and the cloud resource. Therefore, transmission performance corresponding to the site-to-cloud private line connection is generally better than transmission performance corresponding to the broadband connection.

Optionally, fees corresponding to different connection manners may be different. To be specific, a fee corresponding to a connection manner with high data transmission performance is higher than a fee corresponding to a connection manner with low data transmission performance. In addition to the connection manner between the recommended cloud node and the access device of the user, the cloud resource recommendation result may further include fee information corresponding to the connection manner, so that the user further selects a cloud resource with a low fee or meeting a fee budget of the user.

The following describes other embodiments provided in this application with reference to the accompanying drawings.

As shown in FIG. 4, an example in which an access device of a user is denoted as a node k1, a node k2, a node k3, and a node k4 in the figure is used. The access device is located in a transmission network, and the access device is connected to a cloud node through another node (the another node may be referred to as a node configured to perform data transmission in the transmission network) in the transmission network.

Transmission of data related to a cloud resource provided by the cloud node is performed through the transmission network and the access device, so that the user uses the cloud resource. In FIG. 4, a process in which the cloud resource recommendation device performs a cloud resource recommendation method includes the following steps.

Step 1: A network controller and a cloud management platform periodically (or as required) collect information.

In step 1, the network controller collects, from the transmission network, a network topology and QoS information (including an available bandwidth, a delay, a packet loss rate, and the like) of a routing path between the access device and the cloud node. In addition, a provider to which each cloud node belongs reports information about each cloud node to the cloud management platform, where the information about the cloud node includes resource information (including processor information, memory information, storage capacity information, and the like) of the cloud node, a unit price corresponding to a cloud resource provided by the cloud node, and the like.

Step 2: The network controller sends the QoS information to a cloud resource recommendation device, and the cloud management platform sends the information about the cloud node to the cloud resource recommendation device.

After the network controller sends the QoS information to the cloud resource recommendation device, the cloud resource recommendation device obtains the QoS information. For an implementation process, refer to the implementation process of the foregoing step S102. A corresponding technical effect is implemented. Details are not described herein again.

In this embodiment, the network controller, the cloud resource recommendation device, and the cloud management platform shown in FIG. 4 may be devices independent of each other, or may be three different modules of a same device respectively. This is not limited herein.

For example, an implementation in which the network controller, the cloud resource recommendation device, and the cloud management platform are devices independent of each other is used as an example. For example, the network controller obtains the network topology through a border gateway protocol-link state (Border Gateway Protocol-Link State, BGP-LS) or link layer discovery protocol (Link Layer Discovery Protocol, LLDP) technology, collects an available bandwidth of the routing path through SNMP or a telemetry, monitors the transmission network by deploying TWAMP, and periodically collects the delay, the packet loss rate, and the like of the routing path. For example, the cloud management platform provides a northbound interface (for example, an application programming interface (application programming interface, API)) or a message middleware (Kafka) message queue for the cloud node, and each cloud computing service provider exchanges, through the northbound interface (in a manner of dynamic update, periodic update, on-demand update, or the like), information about the cloud resource provided by each cloud node, including but not limited to a computing power, a memory, storage, a supported service scenario, the unit price corresponding to the cloud resource, and the like.

Step 3: A user interface of a terminal device receives an input instruction of a user through interaction, and determines a requirement of the user on the cloud resource according to the input instruction, and the terminal device sends the requirement of the user on the cloud resource to the cloud resource recommendation device. The requirement of the user on the cloud resource includes at least a QoS requirement of the user on the routing path between the access device and the cloud node.

Optionally, the requirement of the user on the cloud resource further includes geographical location information of the access device of the user.

Optionally, the requirement of the user on the cloud resource may further include a first requirement and another possible requirement (for example, looseness of a performance requirement of the user on the QoS requirement). For a process of implementing the requirement of the user on the cloud resource, refer to the implementation process of the foregoing step S101. A corresponding technical effect is implemented. Details are not described herein again.

Step 4: The cloud resource recommendation device determines the access device of the user based on the geographical location information of the access device of the user obtained in step 3 and the network topology obtained in step 1.

In step 4, the cloud resource recommendation device may further determine the access device of the user in another manner. For example, the cloud resource recommendation device may send the geographical location information of the access device of the user obtained in step 3 to the network controller, so that the network controller matches coverage of a network access side device based on the geographical location information of the access device of the user, and determines the access device of the user. In addition, the network controller sends related information of the access device of the user to the cloud resource recommendation device, so that the cloud resource recommendation device determines the access device of the user based on the related information of the access device of the user in step 4.

Step 5: After determining the access device of the user in step 4, the cloud resource recommendation device determines a cloud resource recommendation result based on the QoS information obtained in step 2 and the requirement of the user on the cloud resource obtained in step 3, where the cloud resource recommendation result includes at least a recommended cloud node. QoS information of at least one routing path between the recommended cloud node and the access device of the user meets the QoS requirement.

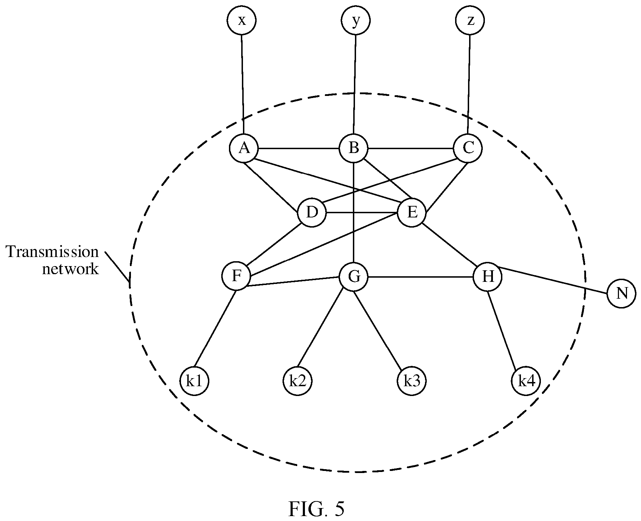

A scenario shown in FIG. 5 is used as an example, an access device of a user includes a node k1, a node k2, a node k3, a node k4, and the like, and a cloud node includes a node x, a node y, a node z, and an edge cloud node N that is deployed close to the access device of the user. The access device of the user is connected to the cloud node through a node configured to perform data transmission in a transmission network. In the example shown in FIG. 5, the node configured to perform data transmission in the transmission network includes a node A, a node B, a node C, a node D, a node E, a node F, a node G, a node H, and the like.

For example, an example in which the access device of the user is the node k4 is used. A routing path P between the node k4 and the node z has four hops, and separately passes through the node k4, the node H, the node E, the node C, and the node z. Four segments of sub-paths included in the routing path are denoted as pi (i=1, 2, 3, and 4). In other words, p1 is a routing path between the node k4 and the node H, p2 is a routing path between the node H and the node E, p3 is a routing path between the node E and the node C, and p4 is a routing path between the node C and the node z. The QoS information received by the cloud resource recommendation device from the network controller in step 2 may include QoS information of the routing path P, and the QoS information may include an available bandwidth, a delay, a packet loss rate, and the like of the routing path.

In an implementation example, the available bandwidth (denoted as bw) of the routing path P is represented as:

$$bw(p) = \min\big(bw(p_i)\big) \quad p_i \in P.$$

$\min(bw(p_i))$ represents that a smallest value in $bw(p_1)$ to $bw(p_4)$ is taken.

The delay (denoted as delay) of the routing path P is represented as:

$$delay(P) = \sum delay(p_i) \quad p_i \in P.$$

$\Sigma\, delay(p_i)$ represents that a sum of $delay(p_1)$ to $delay(p_4)$ is taken.

The packet loss rate (denoted as loss) of the routing path P is represented as:

$$loss(P) = 1 - \prod(1 - loss(p_i)) \quad p_i \in P.$$

$\Pi(1 - loss(p_i))$ represents a product of probabilities that no packet is lost from $p_1$ to $p_4$.

The jitter (denoted as jitter) of the routing path P is represented as:

$$jitter(P) = \sum jitter(p_i) \quad p_i \in P.$$

$\Sigma\, jitter(p_i)$ represents that a sum of $jitter(p_1)$ to $jitter(p_4)$ is taken.

Optionally, the jitter may be a difference (n-1 jitter values) between latencies at every two adjacent moments in n moments within preset duration, and the jitter(pi) is a statistic value of jitter values at the plurality of moments. For example, the statistic value may be an average value, a median, or the like.

In this implementation example, if the cloud resource recommendation device determines, in step 5, that the available bandwidth bw(p) of the routing path P is greater than a bandwidth requirement in the QoS requirement obtained by the cloud resource recommendation device in step 3, determines that the delay delay(P) is less than a delay requirement in the QoS requirement obtained by the cloud resource recommendation device in step 3, and determines that the packet loss rate loss(P) is less than a packet loss rate requirement in the QoS requirement obtained by the cloud resource recommendation device in step 3, the QoS information of the routing path P meets a QoS requirement of the user. In other words, the cloud node z is determined as one cloud node in a recommended cloud node.

Optionally, in step 5, if the QoS information of the routing path P does not meet the QoS requirement of the user, the cloud resource recommendation device may further determine whether QoS information of another routing path between the node k4 and the node z meets the QoS requirement of the user.

In addition, the cloud resource recommendation device may further determine whether QoS information of a routing path between the node k4 and the node x (and between the node k4 and the node y) meets the QoS requirement of the user, and use a cloud node corresponding to the routing path meeting the QoS requirement of the user as the recommended cloud node, to implement a process of determining the cloud resource recommendation result in step 5.

In another implementation example, in step 5, the cloud resource recommendation device detects, based on an in-situ flow information telemetry (In-situ Flow Information Telemetry, IFIT) technology, the end-to-end QoS information such as the available bandwidth, the delay, and the packet loss rate of the routing path between the node k4 and the node x (between the node k4 and the node y, and between the node k4 and the node z), to determine the cloud node that can meet the QoS requirement of the user, and implement the process of determining the cloud resource recommendation result in step 5.

Optionally, the cloud resource recommendation device may send the cloud resource recommendation result to the terminal device of the user, so that the user obtains the cloud resource recommendation result. Alternatively, the cloud resource recommendation device may present the cloud resource recommendation result to the user in a plurality of manners (for example, display on a display screen, voice broadcast, or the like), so that the user obtains the cloud resource recommendation result.

Therefore, the cloud resource recommendation device implements cloud resource recommendation based on the obtained QoS requirement of the user and obtained QoS information of the cloud node. In comparison with a manner of manually selecting the cloud resource, labor costs and time costs can be reduced, and efficient cloud resource recommendation can be implemented. In addition, in a process of determining the cloud resource recommendation result by the cloud resource recommendation device, the cloud resource recommendation result is determined based on the QoS requirement of the user on the routing path between the cloud node and the access device of the user, so that the QoS information of the at least one routing path between the recommended cloud node and the access device of the user included in the cloud resource recommendation result meets the QoS requirement of the user, to improve user experience.

Optionally, the recommended cloud node determined by the cloud resource recommendation device in step 5 further meets the first requirement.

For example, when the first requirement includes a preference requirement of the user on a provider to which the cloud node belongs, a provider to which the recommended cloud node belongs is a provider indicated by the preference requirement of the user on the provider to which the cloud node belongs. In other words, if the user enters a provider qualified to be selected, a taboo is imposed on a cloud node that does not meet the qualification (to be specific, the cloud node is excluded from a selection range), so that only a cloud node within the selection range of the user is recommended.

For another example, when the first requirement includes a preference requirement of the user on a geographical location of the cloud resource, the recommended cloud node is located at a geographical location indicated by the preference requirement of the user on the geographical location of the cloud resource.

For another example, when the first requirement includes a preference requirement of the user on a service scenario, a service scenario of a cloud resource provided by the recommended cloud node includes a service scenario indicated by the preference requirement of the user on the service scenario. In other words, service scenarios supported by the cloud node are sequentially matched based on the preference requirement on the service scenario entered by the user, to select a cloud node that meets the preference requirement on the service scenario. For example, for a scenario such as the internet of things (Internet of Things, IoT), the requirement of the user is mainly a low-delay and simple computing service. In this case, an edge cloud node may be selected.

For another example, when the first requirement includes a redundancy and backup requirement of the user on the cloud resource, the recommended cloud node includes a primary cloud node and at least one standby cloud node.

Optionally, when the recommended cloud node includes at least two cloud nodes, after step 5, the cloud resource recommendation device may further sort the at least two cloud nodes based on fees of the at least two cloud nodes, so that the user determines the fees of the at least two cloud nodes based on a result of the sorting. The cloud resource recommendation device may place the sorting result in the cloud resource recommendation result. In this way, after obtaining the cloud resource recommendation result, the user may determine the sorting result, so that the user further selects a cloud resource with a low fee. In other words, the cloud resource recommendation device calculates, based on a unit price of the cloud resource and a quantity requirement of the user on the cloud resource, fees of rented cloud nodes, and sorts the rented cloud nodes. In addition, if the first requirement includes the redundancy and backup requirement of the user on the cloud resource, an example in which a quantity of standby cloud nodes is 1 is used, the cloud resource recommendation device further needs to calculate a sum of costs of each pair of cloud nodes that meet the QoS requirement of the user, perform sorting in ascending order of the sum of costs, and use a result of the sorting as a part of the cloud resource recommendation result to perform recommendation, so that the user obtains a cloud resource with low costs.

Optionally, the unit price of the cloud resource is dynamically adjusted. For example, a unit price of a cloud resource provided by a cloud node is positively correlated with load of the cloud node. To be specific, higher load of the cloud node indicates a higher unit price of the cloud resource provided by the cloud node, and on the contrary, lower load of the cloud node indicates a lower unit price of the cloud resource provided by the cloud node. In other words, a specific unit price discount provided for a low-load cloud node helps increase a probability that the user selects a cloud resource provided by the low-load cloud node, to improve utilization of the overall cloud resource. This helps reduce a resource waste caused by idleness of the cloud resource. Correspondingly, the cloud resource recommendation device may dynamically obtain the unit price of the cloud resource in each cloud node, so that a recommendation result of the cloud resource is more accurate.

In a possible implementation, the cloud resource recommendation result determined by the cloud resource recommendation device in step 5 further includes a connection manner between the recommended cloud node and the access device of the user. Specifically, because different connection manners between the cloud node and the access device of the user may cause different data transmission performance related to the cloud resource, the cloud resource recommendation result further includes the connection manner between the recommended cloud node and the access device of the user, so that the user subsequently determines, based on the connection manner in the cloud resource recommendation result, data transmission performance of the cloud resource provided by the recommended cloud node. Fees corresponding to different connection manners may be different. To be specific, a fee corresponding to a connection manner with high data transmission performance is higher than a fee corresponding to a connection manner with low data transmission performance. In addition to the connection manner between the recommended cloud node and the access device of the user, the cloud resource recommendation result may further include fee information corresponding to the connection manner, so that the user further selects a cloud resource with a low fee.

Optionally, the connection manner may include a site-to-cloud private line connection, a broadband connection, or another connection. This is not limited herein.

In addition, the requirement that is of the user on the cloud resource and that is obtained by the cloud resource recommendation device in step 3 may further include a requirement of the user on the connection manner, so that the recommended cloud node determined by the cloud resource recommendation device in step 5 meets the requirement of the user on the connection manner.

Example descriptions of different implementation processes corresponding to different connection manners are provided below by using the implementation process of the foregoing step 5 as an example.

An implementation 1 is an implementation in which the recommended cloud node determined in step 5 includes a node in the broadband connection.

In the implementation 1, when the connection manner is the broadband connection, an example in which the routing path P is used as a default routing path is used. In the implementation process of the foregoing step 5, when the cloud resource recommendation device determines that QoS of the routing path P does not meet the QoS requirement of the user, the cloud resource recommendation device may determine that the node z does not meet the QoS requirement of the user. To be specific, the cloud resource recommendation device determines that the recommended cloud node does not include the node z. In addition, the cloud resource recommendation device does not need to determine whether the QoS information of the another routing path between the node k4 and the node z meets the QoS requirement of the user.

An implementation 2 is an implementation in which the recommended cloud node determined in step 5 includes a node in the site-to-cloud private line connection.

In the implementation 2, when the connection manner is the site-to-cloud private line connection, an example in which the routing path P is used as a default routing path is used. In the implementation process of the foregoing step 5, the cloud resource recommendation device first determines whether the QoS information of the routing path P meets the QoS requirement of the user. In addition, when determining that the QoS of the routing path P does not meet the QoS requirement of the user, the cloud resource recommendation device may further determine whether the QoS information of the another routing path between the node k4 and the node z meets the QoS requirement of the user.

An implementation 3 is another implementation in which the recommended cloud node determined in step 5 includes a node in the site-to-cloud private line connection.

In the implementation 3, when the connection manner is the site-to-cloud private line connection, the cloud resource recommendation device may alternatively not need to determine whether the QoS information of the foregoing default routing path meets QoS information of the user, and after determining QoS information of all routing paths between the node k4 and the node z, the cloud resource recommendation device may further determine whether the routing path that meets the QoS requirement of the user exists in the QoS information of all the routing paths.

In an implementation example of the implementation 3, in the scenario shown in FIG. 5, the cloud resource recommendation device obtains a fee of each routing path that is in the rented transmission network and that is used as the site-to-cloud private line connection, and uses the fee as a weight value of a routing path between different nodes (or sets the weight value of the routing path to a value that is positively correlated with the fee).

An implementation process in which the cloud resource recommendation device uses the fee as the weight value of the routing path between different nodes is used as an example. A weight value of the routing path P may be represented as a sum of a fee of the routing path that is between the node k4 and the node H and that is used as the site-to-cloud private line connection, a fee of the routing path that is between the node H and the node E and that is used as the site-to-cloud private line connection, a fee of the routing path that is between the node E and the node C and that is used as the site-to-cloud private line connection, and a fee of the routing path that is between the node C and the node z and that is used as the site-to-cloud private line connection. Similarly, a weight value of the another routing path between the node k4 and the node z may also be determined through a similar summation process.

Further, the cloud resource recommendation device separately processes the following processes by using a multi-constraint routing algorithm (for example, a QoS multi-constraint routing algorithm based on dynamic planning, a QoS multi-constraint routing algorithm based on Lagrange relaxation, or the like) based on a network topology, the weight value of the routing path, and the QoS information.

A1: Determine whether a routing path that meets a QoS requirement constraint of the user exists between the node k4 and the node x. If yes, determine a routing path that meets the QoS requirement and that has a smallest corresponding weight as a target routing path, and determine fee information of the target routing path and a cloud node x corresponding to the target routing path as information included in the cloud resource recommendation result in step 5.

A2: Determine whether a routing path that meets a QoS requirement constraint of the user exists between the node k4 and the node y, and if yes, determine a routing path that meets the QoS requirement and that has a smallest corresponding weight as a target routing path, and determine fee information of the target routing path and a cloud node y corresponding to the target routing path as information included in the cloud resource recommendation result in step 5.

A3: Determine whether a routing path that meets a QoS requirement constraint of the user exists between the node k4 and the node z, and if yes, determine a routing path that meets the QoS requirement and that has a smallest corresponding weight as a target routing path, and determine fee information of the target routing path and a cloud node z corresponding to the target routing path as information included in the cloud resource recommendation result in step 5.

A4: Determine whether a routing path that meets a QoS requirement constraint of the user exists between the node k4 and the node N, and if yes, determine a routing path that meets the QoS requirement and that has a smallest corresponding weight as a target routing path, and determine fee information of the target routing path and a cloud node N corresponding to the target routing path as information included in the cloud resource recommendation result in step 5.

After the foregoing implementation process, the cloud resource recommendation device may further sort the fees of the plurality of target routing paths determined in step A1 to step A4, and display a result of the sorting as a part of the cloud resource recommendation result, so that the user obtains the cloud resource with the low costs.

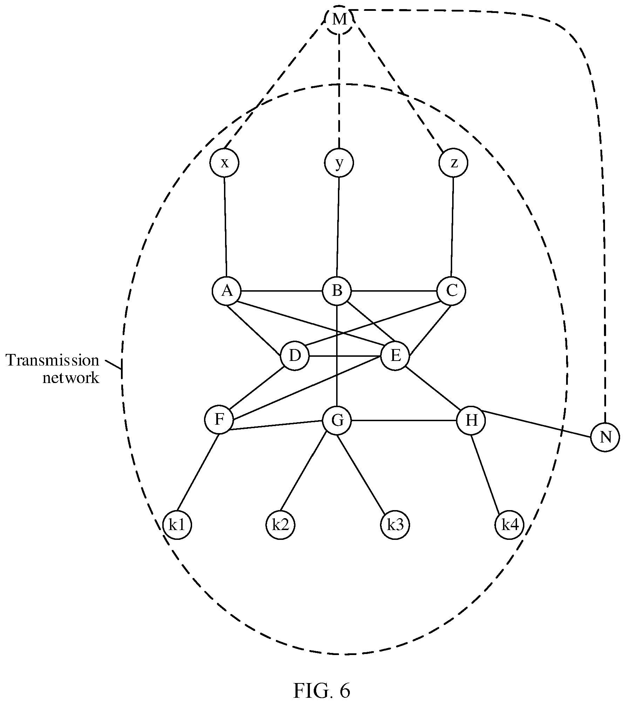

In another implementation example of the implementation 3, a virtual node may be introduced to optimize the foregoing separately processed processes. Descriptions are provided below with reference to an example shown in FIG. 6.

A scenario shown in FIG. 6 is used as an example to describe a case that the connection manner includes a site-to-cloud private line connection. In comparison with the scenario shown in FIG. 5, a virtual node M is newly added in FIG. 6, and the virtual node M is connected to each cloud node in the site-to-cloud private line connection, to construct an abstract topology.

It should be understood that the abstract topology is a topology that is different from a real topology (to be specific, a node in the real topology and a route between nodes actually exist) constructed in a solid line connection (namely, a connection between any two nodes other than the node M in FIG. 6) in FIG. 6. In addition, a node (namely, the virtual node M) that is calculated by using an auxiliary algorithm and dashed lines (namely, connections between a node x (or a node y, a node z, and a node N) and the node M in FIG. 6) are added to the abstract topology based on the real topology. In other words, the virtual node in the abstract topology and a route to the virtual node do not actually exist.

For example, the following describes an implementation process in which the cloud resource recommendation device determines the cloud resource recommendation result in step 5 in the scenario shown in FIG. 6.

For example, an example in which an access device is a node k4 is used. The cloud resource recommendation device obtains a fee in a case that any routing path between the node k4 and any cloud node in a rented transmission network is used as a site-to-cloud private line connection, and uses a fee of each routing path as a weight value of the routing path (or sets a weight value of a routing path in the real topology to a value that is positively correlated with the fee).

It should be understood that, because the virtual node M in the abstract topology in FIG. 6 does not actually exist, a routing path corresponding to a dashed line connection between the virtual node M and each cloud node in the abstract topology does not have a fee of the site-to-cloud private line connection. To be specific, the fee of the site-to-cloud private line connection corresponding to the routing path of the dashed line connection is 0.

In addition, in the implementation 3, fees that need to be paid by the user include a fee of the cloud resource and the fee of the site-to-cloud private line connection. Considering that the weight value of the routing path in the real topology can reflect the fee of the site-to-cloud private line connection, a fee of the cloud resource provided by each cloud node may be used as a weight value of the routing path of the dashed line connection in the abstract topology (or a weight value of the routing path of the dashed line connection is set to a value that is positively correlated with the fee of the cloud resource). Then, the cloud resource recommendation device calculates, based on a network topology, a weight value of a routing path between the access device and each cloud node, a weight value of a routing path between each cloud node and the virtual node, and QoS information, a target routing path that meets a QoS requirement constraint of the user and has a smallest weight and that is from an access device of the user to the virtual node by using a multi-constraint routing algorithm (for example, a QoS multi-constraint routing algorithm based on dynamic planning or a QoS multi-constraint routing algorithm based on Lagrange relaxation), and determines fee information of the target routing path and a cloud node corresponding to the target routing path as the cloud resource recommendation result in step 5. In an execution process of the method, the cloud resource recommendation device may accumulate the weight value of the routing path between the access device and the cloud node and the weight value of the routing path between the cloud node and the virtual node, to obtain a weight value from the access device to the virtual node, and directly select a routing path meeting a requirement based on the weight value from the access device to the virtual node. Because the virtual node is directly connected to each cloud node through a different virtual link separately, once the target routing path is determined according to the foregoing method, the cloud node corresponding to the target routing path may be determined. According to the method, a target cloud node may be selected from a plurality of cloud nodes at a time, and the routing path between the access device and each cloud node does not need to be separately selected. Therefore, the method can improve efficiency of determining a recommended cloud node.

Optionally, if a first requirement of the user includes a redundancy and backup requirement of the user on the cloud resource, the cloud resource recommendation device replaces the multi-constraint routing algorithm with a multi-constraint separate routing algorithm to select at least two target routing paths, where the at least two target routing paths are two routing paths between the access device and one cloud node. The two target routing paths are separate routes that meet a QoS constraint (nodes and links that are on the routing paths do not overlap as much as possible) and have a smallest sum of weights.

Optionally, the multi-constraint separate routing algorithm may include a disjoint multiple constraints routing algorithm (Disjoint Multiple Constraints Routing Algorithm, DIMCRA), a CoSE (Conflicting SRLG Exclusion, CoSE) algorithm, or another algorithm. This is not limited herein.

Therefore, based on the implementation examples of the foregoing implementation 1 to the foregoing implementation 3, it may be learned that, the cloud resource recommendation result obtained by the cloud resource recommendation device in step 5 includes the recommended cloud node, a connection manner between the recommended cloud node and the access device of the user, and a corresponding fee (for example, the fee of the cloud resource in the implementation 1, or the fee of the site-to-cloud private line and the fee of the cloud resource in the implementation 2 and the implementation 3). In this way, the cloud resource recommendation result may provide more cloud-resource-related information for the user. This further improves user experience.

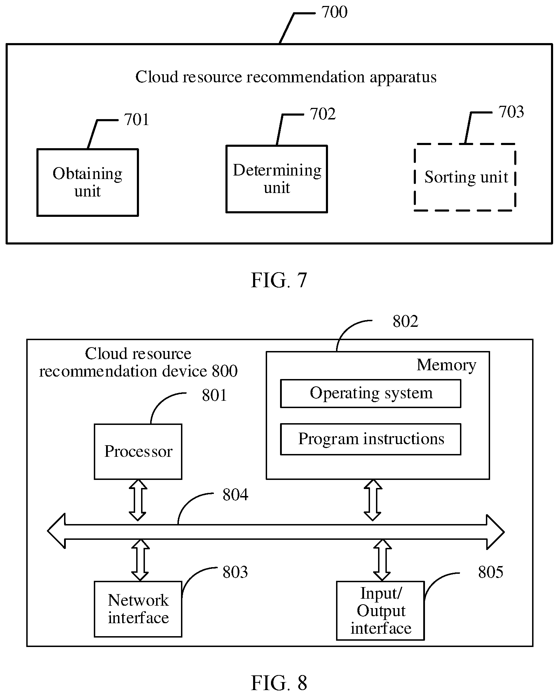

FIG. 7 is a schematic diagram of a cloud resource recommendation apparatus 700 according to an embodiment of this application. The cloud resource recommendation apparatus 700 includes an obtaining unit 701 and a determining unit 702.

It should be understood that the apparatus 700 includes a corresponding unit or module configured to perform the method in any one of the foregoing embodiments. The unit or module included in the apparatus can be implemented by software and/or hardware. For example, the apparatus may be a cloud resource recommendation device, or the apparatus may be a component (for example, a processor, a chip, a chip system, or the like) in the cloud resource recommendation device, or the apparatus may be a logic module or software that can implement all or some functions of the cloud resource recommendation device.

Specifically, the obtaining unit 701 is configured to obtain a requirement of a user on a cloud resource. The requirement of the user on the cloud resource includes a QoS requirement of the user on a routing path between a cloud node and an access device of the user. The obtaining unit 701 is further configured to obtain information about the cloud node. Information about each cloud node includes QoS information of a routing path between the cloud node and the access device of the user. The determining unit 702 is configured to determine a cloud resource recommendation result based on the QoS requirement and the QoS information. The cloud resource recommendation result includes a recommended cloud node. QoS information of at least one routing path between the recommended cloud node and the access device of the user meets the QoS requirement.

In a possible implementation, the QoS requirement includes at least one of the following: a bandwidth requirement of the user on the routing path, a delay requirement of the user on the routing path, a jitter requirement of the user on the routing path, or a packet loss rate requirement of the user on the routing path.

In a possible implementation, that the QoS information of the at least one routing path meets the QoS requirement includes: When the QoS requirement includes the bandwidth requirement of the user on the routing path, an available bandwidth of the at least one routing path is greater than or equal to the bandwidth requirement; when the QoS requirement includes the delay requirement of the user on the routing path, a delay of the at least one routing path is less than or equal to the delay requirement; when the QoS requirement includes the jitter requirement of the user on the routing path, a jitter of the at least one routing path is less than or equal to the jitter requirement; or when the QoS requirement includes the packet loss rate requirement of the user on the routing path, a packet loss rate of the at least one routing path is less than or equal to the packet loss rate requirement.

In a possible implementation, the requirement on the cloud resource further includes a first requirement of the user on the cloud resource, and the first requirement includes at least one of the following: a preference requirement of the user on a provider to which the cloud node belongs, a preference requirement of the user on a geographical location of the cloud resource, a preference requirement of the user on a service scenario, and a redundancy and backup requirement of the user on the cloud resource. The determining unit 702 is configured to determine the cloud resource recommendation result from the plurality of cloud nodes based on the QoS requirement, the QoS information, and the first requirement, where the recommended cloud node included in the cloud resource recommendation result meets the QoS requirement and the first requirement.

In a possible implementation, that the recommended cloud node included in the cloud resource recommendation result meets the first requirement includes: When the first requirement includes the preference requirement of the user on the provider to which the cloud node belongs, a provider to which the recommended cloud node belongs is a provider indicated by the preference requirement of the user on the provider to which the cloud node belongs; when the first requirement includes the preference requirement of the user on the geographical location of the cloud resource, the recommended cloud node is located at a geographical location indicated by the preference requirement of the user on the geographical location of the cloud resource; when the first requirement includes the preference requirement of the user on the service scenario, a service scenario of a cloud resource provided by the recommended cloud node includes a service scenario indicated by the preference requirement of the user on the service scenario; or when the first requirement includes the redundancy and backup requirement of the user on the cloud resource, the recommended cloud node includes a primary cloud node and at least one standby cloud node.

In a possible implementation, the recommended cloud node includes at least two cloud nodes, and the apparatus further includes a sorting unit 703. The sorting unit 703 is configured to sort the at least two cloud nodes based on fees of the at least two cloud nodes.

In a possible implementation, the determining unit 702 is further configured to determine the fees of the at least two cloud nodes based on a quantity requirement of the user on the cloud resource and a unit price of the cloud resource, where the quantity requirement of the user on the cloud resource includes a quantity requirement of the user on a computing resource in the cloud resource and/or a quantity requirement of the user on a storage resource in the cloud resource.

In a possible implementation, the cloud resource recommendation result further includes a connection manner between the recommended cloud node and the access device of the user.

In a possible implementation, the cloud node includes a cloud DC node and/or an edge cloud node.

It should be noted that for specific content such as an information execution process of the units of the cloud resource recommendation apparatus 700, refer to descriptions in the foregoing method embodiments of this application. Details are not described herein again.

Embodiments of this application further provide a cloud resource recommendation device 800. FIG. 8 is a schematic diagram of a structure of a cloud resource recommendation device 800 according to an embodiment of this application.

The cloud resource recommendation device 800 shown in FIG. 8 includes a memory 802 and at least one processor 801.

Optionally, the processor 801 implements the method in the foregoing embodiments by reading instructions stored in the memory 802, or the processor 801 may implement the method in the foregoing embodiments by executing instructions stored inside. When the processor 801 implements the method in the foregoing embodiments by reading the instructions stored in the memory 802, the memory 802 stores the instructions for implementing the method provided in the foregoing embodiments of this application.

Optionally, the at least one processor 801 is one or more central processing units (central processing units, CPUs). The CPU may be a single-core CPU, or may be a multi-core CPU. This is not limited herein.

Further, optionally, the at least one processor 801 may be further configured to perform an implementation process corresponding to the processing unit 702 in the embodiment shown in FIG. 7, and implement a corresponding beneficial effect. Details are not described herein again.

The memory 802 includes but is not limited to a random access memory (random access memory, RAM), a read-only memory (read-only memory, ROM), an erasable programmable read-only memory (Erasable Programmable Read-Only Memory, EPROM), a flash memory, an optical memory, or the like. The memory 802 stores instructions of an operating system.

After the program instructions stored in the memory 802 are read by the at least one processor 801, the cloud resource recommendation device 800 performs a corresponding operation in the foregoing embodiments.

Optionally, the cloud resource recommendation device 800 further includes a network interface 803. The network interface 803 may be a wired interface, for example, a fiber distributed data interface (fiber distributed data interface, FDDI) or a gigabit Ethernet (Gigabit Ethernet, GE) interface. The network interface 803 may alternatively be a wireless interface. The network interface 803 is configured to send and receive data in any one of the foregoing method embodiments.

Further, optionally, the network interface 803 may be further configured to perform an implementation process corresponding to the transceiver unit 701 in the embodiment shown in FIG. 7, and implement a corresponding beneficial effect. Details are not described herein again.

It should be understood that the network interface 803 has functions of receiving data and sending data. The function of "receiving data" and the function of "sending data" may be integrated into a same transceiver interface for implementation, or the function of "receiving data" and the function of "sending data" may be separately implemented in different interfaces. This is not limited herein. In other words, the network interface 803 may include one or more interfaces, configured to implement the function of "receiving data" and the function of "sending data".

After the processor 801 reads the program instructions in the memory 802, for other functions that can be executed by the cloud resource recommendation device 800, refer to the descriptions in the foregoing method embodiments.

Optionally, the cloud resource recommendation device 800 further includes a bus 804. The processor 801 and the memory 802 are usually connected to each other through the bus 804, or may be connected to each other in another manner.

Optionally, the cloud resource recommendation device 800 further includes an input/output interface 805. The input/output interface 805 is configured to be connected to an input device, and receive related configuration information that is entered through the input device by a user or another device capable of linkage with the cloud resource recommendation device 800. The input device includes, but is not limited to, a keyboard, a touchscreen, a microphone, and the like.

For a specific implementation of the cloud resource recommendation device 800, refer to the descriptions in the foregoing method embodiments. Details are not described herein again.

Embodiments of this application further provide a computer-readable storage medium, configured to store computer instructions. When the computer instructions are executed by a processor, the processor performs the method in any one of the foregoing method embodiments.

Embodiments of this application further provide a computer program product. The computer program product includes instructions. When the instructions in the computer program product are executed by a processor, the processor performs the method in any one of the foregoing method embodiments.

Embodiments of this application further provide a chip system. The chip system includes at least one processor, configured to support the cloud resource recommendation apparatus in implementing a function in the method in any one of the foregoing method embodiments.

In a possible design, the chip system may further include a memory. The memory is configured to store program instructions and data that are necessary for the cloud resource recommendation apparatus. The chip system may include a chip, or may include a chip and another discrete component. Optionally, the chip system further includes an interface circuit, and the interface circuit provides program instructions and/or data for the at least one processor.

Embodiments of this application further provide a cloud resource recommendation system. The cloud resource recommendation system includes the cloud resource recommendation apparatus (or the cloud resource recommendation device) in any one of the foregoing embodiments.

Optionally, the cloud resource recommendation system further includes a cloud node, a network controller, a cloud management platform, an access device of a user, and the like.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A cloud resource recommendation method, wherein the method comprises:

   obtaining a requirement of a user on a cloud resource, wherein the requirement of the user on the cloud resource comprises a quality of service QoS requirement of the user on a routing path between a cloud node providing the cloud resource and an access device of the user;
   obtaining information about the cloud node, wherein information about each cloud node comprises QoS information of a routing path between the cloud node and the access device of the user; and
   determining a cloud resource recommendation result based on the QoS requirement and the QoS information, wherein the cloud resource recommendation result comprises a recommended cloud node, and QoS information of at least one routing path between the recommended cloud node and the access device of the user meets the QoS requirement.

2. The method according to claim 1, wherein the QoS requirement comprises at least one of the following: a bandwidth requirement of the user on the routing path, a delay requirement of the user on the routing path, a jitter requirement of the user on the routing path, or a packet loss rate requirement of the user on the routing path.

3. The method according to claim 2, wherein that the QoS information of the at least one routing path meets the QoS requirement comprises:

    when the QoS requirement comprises the bandwidth requirement of the user on the routing path, an available bandwidth of the at least one routing path is greater than or equal to the bandwidth requirement;

    when the QoS requirement comprises the delay requirement of the user on the routing path, a delay of the at least one routing path is less than or equal to the delay requirement;

    when the QoS requirement comprises the jitter requirement of the user on the routing path, a jitter of the at least one routing path is less than or equal to the jitter requirement; or

    when the QoS requirement comprises the packet loss rate requirement of the user on the routing path, a packet loss rate of the at least one routing path is less than or equal to the packet loss rate requirement.

4. The method according to any one of claims 1 to 3, wherein the requirement for the cloud resource further comprises a first requirement of the user on the cloud resource, and the first requirement comprises at least one of the following: a preference requirement of the user on a provider to which the cloud node belongs, a preference requirement of the user on a geographical location of the cloud resource, a preference requirement of the user on a service scenario, and a disaster recovery and backup requirement of the user on the cloud resource; and

the determining a cloud resource recommendation result from a plurality of cloud nodes based on the QoS requirement and the QoS information comprises:

determining the cloud resource recommendation result from the plurality of cloud nodes based on the QoS requirement, the QoS information, and the first requirement, wherein the recommended cloud node comprised in the cloud resource recommendation result meets the QoS requirement and the first requirement.

5. The method according to claim 4, wherein that the recommended cloud node comprised in the cloud resource recommendation result meets the first requirement comprises:

    when the first requirement comprises the preference requirement of the user on the provider to which the cloud node belongs, a provider to which the recommended cloud node belongs is a provider indicated by the preference requirement of the user on the provider to which the cloud node belongs;

    when the first requirement comprises the preference requirement of the user on the geographical location of the cloud resource, the recommended cloud node is located at a geographical location indicated by the preference requirement of the user on the geographical location of the cloud resource;

    when the first requirement comprises the preference requirement of the user on the service scenario, a service scenario of a cloud resource provided by the recommended cloud node comprises a service scenario indicated by the preference requirement of the user on the service scenario; or

    when the first requirement comprises the redundancy and backup requirement of the user on the cloud resource, the recommended cloud node comprises a primary cloud node and at least one standby cloud node.

6. The method according to any one of claims 1 to 5, wherein the recommended cloud node comprises at least two cloud nodes, and the method further comprises:
sorting the at least two cloud nodes based on fees of the at least two cloud nodes.

7. The method according to claim 6, wherein before the sorting the at least two cloud nodes based on fees of the at least two cloud nodes, the method further comprises:
determining the fees of the at least two cloud nodes based on a quantity requirement of the user on the cloud resource and a unit price of the cloud resource, wherein the quantity requirement of the user on the cloud resource comprises a quantity requirement of the user on a computing resource in the cloud resource and/or a quantity requirement of the user on a storage resource in the cloud resource.

8. The method according to any one of claims 1 to 7, wherein the cloud resource recommendation result further comprises a connection manner between the recommended cloud node and the access device of the user.

9. The method according to any one of claims 1 to 8, wherein the cloud node comprises a cloud data center DC node and/or an edge cloud node.

10. A cloud resource recommendation apparatus, wherein the apparatus comprises:

an obtaining unit, configured to obtain a requirement of a user on a cloud resource, wherein the requirement of the user on the cloud resource comprises a quality of service QoS requirement of the user on a routing path between a cloud node providing the cloud resource and an access device of the user, wherein
the obtaining unit is further configured to obtain information about the cloud node, wherein information about each cloud node comprises QoS information of a routing path between the cloud node and the access device of the user; and
a determining unit, configured to determine a cloud resource recommendation result based on the QoS requirement and the QoS information, wherein the cloud resource recommendation result comprises a recommended cloud node, and QoS information of at least one routing path between the recommended cloud node and the access device of the user meets the QoS requirement.

11. The apparatus according to claim 10, wherein the QoS requirement comprises at least one of the following:
a bandwidth requirement of the user on the routing path, a delay requirement of the user on the routing path, a jitter requirement of the user on the routing path, or a packet loss rate requirement of the user on the routing path.

12. The apparatus according to claim 11, wherein that the QoS information of the at least one routing path meets the QoS requirement comprises:

when the QoS requirement comprises the bandwidth requirement of the user on the routing path, an available bandwidth of the at least one routing path is greater than or equal to the bandwidth requirement;
when the QoS requirement comprises the delay requirement of the user on the routing path, a delay of the at least one routing path is less than or equal to the delay requirement;
when the QoS requirement comprises the jitter requirement of the user on the routing path, a jitter of the at least one routing path is less than or equal to the jitter requirement; or

when the QoS requirement comprises the packet loss rate requirement of the user on the routing path, a packet loss rate of the at least one routing path is less than or equal to the packet loss rate requirement.

13. The apparatus according to any one of claims 10 to 12, wherein the requirement for the cloud resource further comprises a first requirement of the user on the cloud resource, and the first requirement comprises at least one of the following: a preference requirement of the user on a provider to which the cloud node belongs, a preference requirement of the user on a geographical location of the cloud resource, a preference requirement of the user on a service scenario, and a redundancy and backup requirement of the user on the cloud resource; and the determining unit is configured to determine the cloud resource recommendation result from the plurality of cloud nodes based on the QoS requirement, the QoS information, and the first requirement, wherein the recommended cloud node comprised in the cloud resource recommendation result meets the QoS requirement and the first requirement.

14. The apparatus according to claim 13, wherein that the recommended cloud node comprised in the cloud resource recommendation result meets the first requirement comprises:

when the first requirement comprises the preference requirement of the user on the provider to which the cloud node belongs, a provider to which the recommended cloud node belongs is a provider indicated by the preference requirement of the user on the provider to which the cloud node belongs;
when the first requirement comprises the preference requirement of the user on the geographical location of the cloud resource, the recommended cloud node is located at a geographical location indicated by the preference requirement of the user on the geographical location of the cloud resource;
when the first requirement comprises the preference requirement of the user on the service scenario, a service scenario of a cloud resource provided by the recommended cloud node comprises a service scenario indicated by the preference requirement of the user on the service scenario; or
when the first requirement comprises the redundancy and backup requirement of the user on the cloud resource, the recommended cloud node comprises a primary cloud node and at least one standby cloud node.

15. The apparatus according to any one of claims 10 to 14, wherein the recommended cloud node comprises at least two cloud nodes, and the apparatus further comprises:

a sorting unit, configured to sort the at least two cloud nodes based on fees of the at least two cloud nodes.

16. The apparatus according to claim 15, wherein the determining unit is further configured to determine the fees of the at least two cloud nodes based on a quantity requirement of the user on the cloud resource and a unit price of the cloud resource, wherein the quantity requirement of the user on the cloud resource comprises a quantity requirement of the user on a computing resource in the cloud resource and/or a quantity requirement of the user on a storage resource in the cloud resource.

17. The apparatus according to any one of claims 10 to 16, wherein the cloud resource recommendation result further comprises a connection manner between the recommended cloud node and the access device of the user.

18. The apparatus according to any one of claims 10 to 17, wherein the cloud node comprises a cloud data center DC node and/or an edge cloud node.

19. A cloud resource recommendation device, comprising at least one processor, wherein the at least one processor is coupled to a memory;

the memory is configured to store a program or instructions; and
the at least one processor is configured to execute the program or the instructions, to enable the device to implement the method according to any one of claims 1 to 9.

20. A computer-readable storage medium, wherein the medium stores instructions; and when the instructions are executed by a computer, the method according to any one of claims 1 to 9 is implemented.

21. A computer program product, comprising instructions, wherein when the instructions are run on a computer, the computer is enabled to perform the method according to any one of claims 1 to 9.

Cloud node

Transmission
network

Access device
of a user

FIG. 1

Cloud DC node

Edge cloud
node

Transmission
network

Access device
of a user

FIG. 2

100

S101: Obtain a requirement of a user on a cloud resource, where the requirement of the user on the cloud resource includes a QoS requirement

S102: Obtain information about a cloud node, where the information about the cloud node includes QoS information

S103: Determine a cloud resource recommendation result based on the QoS requirement and the QoS information

FIG. 3

User interface interaction

Cloud resource recommendation device

Network controller

Cloud management platform

Cloud node

Transmission network

Access device

$K_1$ $K_2$ $K_3$ $K_4$

FIG. 4

Transmission network

FIG. 5

FIG. 6

700

Cloud resource recommendation apparatus

701

Obtaining unit

702

Determining unit

703

Sorting unit

FIG. 7

802

Cloud resource recommendation device 800

801

Processor

Memory

Operating system

Program instructions

804

803

Network interface

Input/ Output interface

805

FIG. 8

## INTERNATIONAL SEARCH REPORT

International application No.

**PCT/CN2023/095705**

| A. | CLASSIFICATION OF SUBJECT MATTER |
| --- | --- |

G06Q30/06(2023.01)i

According to International Patent Classification (IPC) or to both national classification and IPC

| B. | FIELDS SEARCHED |
| --- | --- |

Minimum documentation searched (classification system followed by classification symbols)

IPC:H04L,H04Q,G06Q

Documentation searched other than minimum documentation to the extent that such documents are included in the fields searched

Electronic data base consulted during the international search (name of data base and, where practicable, search terms used)

CNABS, VEN, CNTXT, ENTXTC, CJFD, 3GPP: 云资源, 推荐, 用户, 服务质量, QoS, 需求, 云节点, 路由, 路径, 带宽, 时延, 抖动, 丢包率, cloud, resource+, recommend+, user+, Quality of Service, QoS, demand+, cloud node+, rout+, path+, bandwidth, latency, jitter, packet loss rate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 112579891 A (ISOFTSTONE POWER INFORMATION TECHNOLOGY (GROUP) CO., LTD.) 30 March 2021 (2021-03-30)<br>  claims 1-10, and description, paragraphs 24-57 | 1-21 |
| Y | CN 107404523 A (CHINA UNIVERSITY OF PETROLEUM (EAST CHINA)) 28 November 2017 (2017-11-28)<br>  claim 7 | 1-21 |
| A | CN 109658187 A (NEUSOFT CORP.) 19 April 2019 (2019-04-19)<br>  entire document | 1-21 |
| A | US 2014068075 A1 (BONILLA MILTON A.; JANG SOOBAEK; PHAM THANH T.; REKESH DMITRY; RODRIGUEZ PETER P.; SITTLER KATHLEEN H.; SNITZER BRIAN J.; IBM;) 06 March 2014 (2014-03-06)<br>  entire document | 1-21 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 August 2023** | **28 August 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2023/095705**

| Patent document cited in search report | | | Publication date (day/month/year) | Patent family member(s) | | | Publication date (day/month/year) |
|---|---|---|---|---|---|---|---|
| CN | 112579891 | A | 30 March 2021 | None | | | |
| CN | 107404523 | A | 28 November 2017 | None | | | |
| CN | 109658187 | A | 19 April 2019 | None | | | |
| US | 2014068075 | A1 | 06 March 2014 | US | 9251517 | B2 | 02 February 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210589132